(19) Europäisches Patentamt / European Patent Office / Office européen des brevets

(11) **EP 4 624 504 A1**

(12) **EUROPEAN PATENT APPLICATION**
published in accordance with Art. 153(4) EPC

(43) Date of publication:
01.10.2025 Bulletin 2025/40

(21) Application number: 23894468.0

(22) Date of filing: 13.11.2023

(51) International Patent Classification (IPC):
$C08G\ 18/12^{(2006.01)}$  $C08G\ 18/32^{(2006.01)}$
$C08G\ 18/40^{(2006.01)}$  $C08G\ 18/42^{(2006.01)}$
$C08G\ 18/48^{(2006.01)}$  $C08G\ 18/66^{(2006.01)}$
$C08G\ 18/76^{(2006.01)}$  $B60C\ 7/00^{(2006.01)}$

(52) Cooperative Patent Classification (CPC):
B60C 7/00; C08G 18/12; C08G 18/32; C08G 18/40;
C08G 18/42; C08G 18/48; C08G 18/66;
C08G 18/76

(86) International application number:
PCT/JP2023/040786

(87) International publication number:
WO 2024/111459 (30.05.2024 Gazette 2024/22)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 22.11.2022 JP 2022186853
19.12.2022 JP 2022202620

(71) Applicant: Daicel Corporation
Osaka-shi, Osaka 530-0011 (JP)

(72) Inventors:
• KAMADA, Takeru
  Tokyo 108-8230 (JP)
• TAKAOKA, Shinnosuke
  Tokyo 108-8230 (JP)

(74) Representative: Grünecker Patent- und
Rechtsanwälte
PartG mbB
Leopoldstraße 4
80802 München (DE)

(54) **POLYURETHANE RESIN**

(57) Provided is a resin excellent in flexibility and fatigue resistance and less likely to harden in a low temperature region. A polyurethane resin of the present disclosure contains: a constituent unit derived from a urethane prepolymer containing an aromatic diisocyanate and a diol compound as constituent units; and a structural portion derived from a curing agent, wherein the urethane prepolymer has a k value of less than 5.00, the diol compound includes polytetramethylene ether glycol and polycaprolactone diol and/or includes a copolymer of polytetramethylene ether glycol and caprolactone diol, and a molar ratio [polytetramethylene ether glycol/polycaprolactone] of a polytetramethylene ether glycol unit to a polycaprolactone unit in the urethane prepolymer is 3/7 or more.

FIG. 1

**Description**

Technical Field

The present disclosure relates to a polyurethane resin. More specifically, the present disclosure relates to a polyurethane resin preferably used in a spoke of a non-pneumatic tire. The present application claims priority to JP 2022-186853 filed in Japan on November 22, 2022 and JP 2022-202620 filed in Japan on December 19, 2022, the contents of which are incorporated herein by reference.

Background Art

A pneumatic tire has capabilities in load carrying, road shock absorption, and force transmission (accelerating, stopping, and steering) and thus is a preferred choice for use on various vehicles, particularly, bicycles, motorcycles, automobiles, and trucks.

In recent years, a non-pneumatic tire has been used as an alternative to a pneumatic tire. The non-pneumatic tire is supported not by typical air pressure, but by structure.

As a spoke used for the non-pneumatic tire, for example, spokes disclosed in Patent Documents 1 to 3 are known, and an ether-based polyurethane material is mainly used. Patent Document 1 describes a spoke that has a specific structure, whereby distortion of the spoke is likely to decrease and fatigue is less likely to occur, and occurrence and propagation of cracks can be reduced.

Citation List

Patent Document

Patent Document 1: JP 2008-260514 A

Patent Document 2: JP 2015-518448 T

Patent Document 3: JP 2017-501922 T

Summary of Invention

Technical Problem

In recent years, for the purpose of weight reduction of the non-pneumatic tire, reduction in thickness of the spoke is sometimes required. However, when the thickness of a typical spoke is reduced, the spoke tends to flex. Thus, a more flexible resin is required.

When a vehicle including the non-pneumatic tire moves a long distance or performs high-speed driving, the number of rotations of the tire increases, and therefore, the non-pneumatic tire and the resin constituting the member that constitutes the non-pneumatic tire are required to have higher fatigue resistance.

As a method for increasing flexibility and fatigue resistance, it is conceivable to use an ether-based polyurethane resin having a long soft segment. However, when the soft segment is lengthened, there is a problem that crystallization of the resin occurs in a low temperature region, the resin hardens, and the fatigue resistance is also deteriorated.

Therefore, an object of the present disclosure is to provide a resin which is excellent in flexibility and fatigue resistance and less likely to harden in a low temperature region. Another object of the present disclosure is to provide a spoke excellent in flex resistance and fatigue resistance and a non-pneumatic tire including the spoke.

Solution to Problem

As a result of intensive studies to solve the above problems, the present inventors have found that by using a specific polyurethane resin, a resin which is excellent in flexibility and fatigue resistance and less likely to harden in a low temperature region can be obtained. The present disclosure relates to what has been completed based on these findings.

That is, the present disclosure provides a polyurethane resin containing: a constituent unit derived from a urethane prepolymer containing an aromatic diisocyanate and a diol compound as constituent units; and a structural portion derived from a curing agent, in which the urethane prepolymer has a k value of less than 5.00, the diol compound includes polytetramethylene ether glycol and polycaprolactone diol and/or includes a copolymer of polytetramethylene ether glycol and caprolactone diol, and a molar ratio [polytetramethylene ether glycol/polycaprolactone] of polytetramethylene ether glycol units to polycaprolactone units in the urethane prepolymer is 3/7 or more.

The aromatic diisocyanate preferably includes diphenylmethane diisocyanate.

The diol compound preferably has a number average molecular weight of 4000 or less.

The polycaprolactone diol preferably includes polycaprolactone diol using diethylene glycol as an initiator.

The curing agent preferably includes 1,4-butanediol.

A molar ratio [NCO/OH] of isocyanate groups to hydroxy groups is preferably from 0.90 to 1.10.

The polyurethane resin is preferably used for a spoke of a non-pneumatic tire.

The present disclosure also provides a spoke of a non-pneumatic tire including the polyurethane resin.

The present disclosure also provides non-pneumatic tire including: an outer reinforced annular band; a hub; and the spoke extending between a radially inner side of the annular band and the hub.

Advantageous Effects of Invention

The polyurethane resin of the present disclosure is excellent in flexibility and fatigue resistance, and less likely to harden in a low temperature region. Thus, it is possible to produce a spoke excellent in flex resistance and fatigue resistance using the polyurethane resin.

Brief Description of Drawings

FIG. 1 is a schematic view showing an embodiment of a non-pneumatic tire including a spoke formed from a polyurethane resin of the present disclosure.
FIG. 2 is a graph showing DMA charts of Example 3 and Comparative Example 4.

Description of Embodiments

[Polyurethane resin]

A polyurethane resin of the present disclosure contains at least a constituent unit derived from a urethane prepolymer containing an aromatic diisocyanate and a diol compound as constituent units, and a structural portion derived from a curing agent. That is, the polyurethane resin is a resin obtained by allowing a reaction of a urethane prepolymer containing an aromatic diisocyanate and a diol compound as constituent units, a curing agent, and another component as necessary.

(Urethane prepolymer)

The urethane prepolymer is a prepolymer obtained by allowing a reaction of an isocyanate including an aromatic diisocyanate, a polyol including a diol compound, and another component as necessary.

The urethane prepolymer has a k value (that is, a molar ratio [polyisocyanate/polyol] of polyisocyanates to polyols constituting the urethane prepolymer) of less than 5.00, preferably 4.80 or less, more preferably 4.50 or less, and still more preferably 4.30 or less. When the k value is less than 5.00, a polyurethane resin having high flexibility and fatigue resistance is obtained. Permanent set is small, and temperature stability of the resin is excellent. The k value may be within a range that does not impair the curing of the present invention, and may be, for example, 3.50 or more and 4.00 or more.

Examples of the aromatic diisocyanate include tolylene diisocyanate (TDI), diphenylmethane diisocyanate (MDI), 4,4'-diisocyanato-3,3'-dimethylbiphenyl (tolidine diisocyanate (TODI)), 4,4'-dibenzyl diisocyanate, 1,5-naphthylene diisocyanate (NDI), xylylene diisocyanate, 1,3-phenylene diisocyanate, and 1,4-phenylene diisocyanate (PPDI). Among them, TDI, MDI, TODI, NDI, and PPDI are preferable, and MDI is more preferable. Examples of MDI include 2,2'-diphenylmethane diisocyanate, 2,4'-diphenylmethane diisocyanate, and 4,4'-diphenylmethane diisocyanate. A single type of the aromatic diisocyanate may be used alone, or two or more types thereof may be used.

The urethane prepolymer may contain a diisocyanate other than the aromatic diisocyanate as a diisocyanate constituent unit. Examples of the other diisocyanates include aliphatic diisocyanates and alicyclic diisocyanates. A single type of the other diisocyanate may be used alone, or two or more types thereof may be used.

Examples of the aliphatic diisocyanate include 1,4-tetramethylene diisocyanate, 1,5-pentamethylene diisocyanate, 1,6-hexamethylene diisocyanate, 1,7-heptamethylene diisocyanate, 1,8-octamethylene diisocyanate, 1,9-nonamethylene diisocyanate, 2,2,4-trimethylhexamethylene diisocyanate, 2,4,4-trimethylhexamethylene diisocyanate, and 1,10-decamethylene diisocyanate.

Examples of the alicyclic diisocyanate include 1,3-cyclohexane diisocyanate, 1,4-cyclohexane diisocyanate, 1,3-bis(isocyanatomethyl)cyclohexane, 1,4-bis(isocyanatomethyl)cyclohexane, 4,4'-dicyclohexylmethane diisocyanate, isophorone diisocyanate, and norbornene diisocyanate.

A proportion of the aromatic diisocyanate (particularly MDI) in the isocyanate constituting the urethane prepolymer is preferably 60 mol% or more, more preferably 80 mol% or more, still more preferably 90 mol% or more, and particularly preferably 95 mol% or more, with respect to 100 mol% of a total amount of the isocyanate.

The diol compound includes polytetramethylene ether glycol and polycaprolactone diol and/or includes a copolymer of polytetramethylene ether glycol and caprolactone diol. That is, the diol compound includes, in an embodiment, polytetramethylene ether glycol and polycaprolactone diol. The diol compound includes, in another embodiment, a copolymer of polytetramethylene ether glycol and caprolactone diol. The diol compound may include all of polytetramethylene ether glycol, polycaprolactone diol, and a copolymer of polytetramethylene ether glycol and caprolactone diol. A single type of the diol compound may be used alone, or two or more types thereof may be used.

When the copolymer is used as the diol compound, as compared with a case where the polytetramethylene ether glycol and the polycaprolactone diol are mixed, a composition containing the urethane prepolymer described above and a curing agent described later has a low viscosity and excellent workability, and is suppressed time-dependent viscosity increase and has excellent storage stability. The polytetramethylene ether glycol and the polycaprolactone diol may be incompatible, and in this case, a block sequence varies from lot to lot in the prepolymer, physical properties of the polyurethane resin vary, and thus, stable production is difficult. On the other hand, when the copolymer is used, it is not necessary to consider compatibility, the urethane prepolymer is excellent in transparency, the lot-to-lot variation of the diol compound is less likely to occur, and thus production stability is excellent.

A number average molecular weight of polytetramethylene ether glycol is preferably 4000 or less, more preferably 3000 or less, and still more preferably 2500 or less. When the number average molecular weight is 4000 or less, the polyurethane resin is less likely to harden in a low temperature region. The number average molecular weight is preferably 500 or more, more preferably 1000 or more, and still more preferably 1500 or more. When the number average molecular weight is 500 or more, the flexibility of the polyurethane resin is further improved.

The polycaprolactone diol is obtained by ring-opening polymerization of ε-caprolactone using a compound having two or more hydroxy groups as an initiator. That is, the polycaprolactone diol has a structure in which (poly) caprolactone is bonded to the initiator and two or more hydroxy groups of the initiator.

As the initiator, a diol having four or less repeating units such as ethylene glycol, propylene glycol, 1,3-propanediol, 1,4-butanediol, neopentyl glycol, diethylene glycol, and dipropylene glycol is preferable, and diethylene glycol is more preferable.

A number average molecular weight of the polycaprolactone diol is preferably 4000 or less, more preferably 3000 or less, and still more preferably 2500 or less. When the number average molecular weight is 4000 or less, the polyurethane resin is less likely to harden in a low temperature region. The number average molecular weight is preferably 500 or more, more preferably 1000 or more, and still more preferably 1500 or more. When the number average molecular weight is 500 or more, the flexibility of the polyurethane resin is further improved.

As the copolymer of polytetramethylene ether glycol and caprolactone diol, a known or typical copolymer is used, and among them, polycaprolactone diol obtained by using polytetramethylene ether glycol as an initiator is preferable. The polycaprolactone diol is obtained by ring-opening polymerization of ε-caprolactone using polytetramethylene ether glycol as an initiator.

A number average molecular weight of the copolymer is preferably 4000 or less, more preferably 3000 or less, and still more preferably 2500 or less. When the number average molecular weight is 4000 or less, the polyurethane resin is less likely to harden in a low temperature region. The number average molecular weight is preferably 500 or more, more preferably 1000 or more, and still more preferably 1500 or more. When the number average molecular weight is 500 or more, the flexibility of the polyurethane resin is further improved.

A number average molecular weight of the diol compound is preferably 4000 or less, more preferably 3000 or less, and still more preferably 2500 or less. When the number average molecular weight is 4000 or less, the polyurethane resin is less likely to harden in a low temperature region. The number average molecular weight is preferably 500 or more, more preferably 1000 or more, and still more preferably 1500 or more. When the number average molecular weight is 500 or more, the flexibility of the polyurethane resin is further improved. The number average molecular weight of the diol compound is a value calculated as a weighted average of a plurality of diol compounds constituting the prepolymer.

The urethane prepolymer may contain, as a diol constituent unit, polytetramethylene ether glycol, polycaprolactone diol, and a diol compound other than the copolymer. A single type of the other diol compound may be used alone, or two or more types thereof may be used.

A proportion of the diol compound (particularly, one or more selected from the group consisting of polytetramethylene ether glycol, polycaprolactone diol, and the copolymer) in the polyol constituting the urethane prepolymer is preferably 60 mol% or more, more preferably 80 mol% or more, still more preferably 90 mol% or more, and particularly preferably 95 mol% or more, with respect to 100 mol% of a total amount of the polyol.

A molar ratio [polytetramethylene ether glycol/polycaprolactone] of polytetramethylene ether glycol units to polycaprolactone units in the urethane prepolymer is 3/7 or more, preferably 5/5 or more, and more preferably 6/4 or more. When the molar ratio is 3/7 or more, the polyurethane resin is excellent in both flexibility and fatigue resistance. The molar ratio is preferably 9/1 or less.

A proportion of residual isocyanate groups (residual NCO) in the urethane prepolymer is preferably from 5.0 to 13.0 mol%, more preferably from 7.0 to 11.0 mol% with respect to a total amount (100 mol%) of the isocyanate groups in all isocyanates for forming the urethane prepolymer. When the residual NCO is within the above range, a curing reaction by the curing agent appropriately proceeds.

The urethane prepolymer is obtained by allowing a reaction of an isocyanate containing the aromatic diisocyanate, a polyol containing the diol compound, and another component as necessary. The reaction can be performed by a known or typical method.

(Curing agent)

As the curing agent, a known or typical chain extender used as a chain extender of the polyurethane resin can be used. A single type of the curing agent may be used alone, or two or more types thereof may be used.

Examples of the curing agent include a diol such as ethylene glycol, diethylene glycol, propylene glycol, 1,3-propanediol, 1,3-butanediol, 1,4-butanediol, 1,5-pentanediol, 1,2-pentanediol, 2,3-pentanediol, neopentyl glycol, 1,6-hexanediol, 3-methyl-1,5-pentanediol, 1,4-cyclohexanediol, and 1,4-cyclohexanedimethanol; and a diamine such as hexamethylenediamine, 3,3'-dimethyl-4,4'-diaminodicyclohexylmethane, and 4,4'-methylenebis-2-chloroaniline. Among them, the diol is preferable, ethylene glycol, 1,3-propanediol, and 1,4-butanediol are more preferable, and 1,4-butanediol is particularly preferable.

A proportion of 1,4 butanediol in the curing agent is preferably 60 mol% or more, more preferably 80 mol% or more, still more preferably 90 mol% or more, and particularly preferably 95 mol% or more, with respect to 100 mol% of a total amount of the curing agent.

A content of the curing agent (particularly, 1,4-butanediol) is preferably from 6 to 10 parts by mass, and more preferably from 8 to 9 parts by mass, with respect to 100 parts by mass of the total amount of the urethane prepolymer. When the content is within the above range, the flexibility of the polyurethane resin is more excellent.

(Polyurethane resin)

A molar ratio [NCO/OH] of the isocyanate groups to the hydroxy groups in the polyurethane resin is preferably from 0.90 to 1.10, and more preferably from 0.95 to 1.05. When the molar ratio is within the above range, a flexible and highly fatigue-resistant polyurethane resin is easily obtained. The hydroxy groups include a hydroxy group present in the diol compound and a hydroxy group which may be present in the curing agent.

The polyurethane resin preferably has a tensile elastic modulus of 45% or less, more preferably 40% or less as measured at a temperature of 23°C under 10% elongation in accordance with JIS K7161. When the tensile elastic modulus is 45% or less, the flexibility of the polyurethane resin is more excellent. The tensile elastic modulus is preferably 20% or more, more preferably 25% or more from the viewpoint of having appropriate strength.

A storage elastic modulus (sometimes referred to as "E' (23°C)") of the polyurethane resin at a temperature of 23°C is preferably from 70 to 130 MPa, more preferably from 80 to 120 MPa, and still more preferably from 90 to 110 MPa. When the E' (23°C) is 70 MPa or more, hardness tends to increase, and a function of supporting a vehicle body becomes more sufficient. When the E' (23°C) is 130 MPa or less, the flexibility is further enhanced, and deformation is less likely to occur.

The storage elastic modulus (sometimes referred to as "E' (100°C)") of the polyurethane resin at a temperature of 100°C is preferably from 40 to 90 MPa, and more preferably from 50 to 80 MPa. A maximum temperature reached when a tire accumulates heat is around 100°C. When the E' (100°C) is within the above range, a rate of change from the storage elastic modulus at room temperature is low, and thermal stability is excellent.

A reduction rate (sometimes referred to as an "E' reduction rate") of the E' (100°C) with respect to the E' (23°C) is preferably less than 45%, more preferably 43% or less, and still more preferably 40% or less. When the E' reduction rate is less than 45%, temperature stability of elastic change is more excellent, and when the polyurethane resin is used as a constituent material of a non-pneumatic tire, ride comfort of a vehicle is improved. The E' reduction rate is a value calculated by a formula described below.

$$\text{E' reduction rate} = \{\text{E' }(23°C) - \text{E' }(100°C)\}/\text{E' }(23°C) \times 100$$

tanδ of the polyurethane resin at 23°C is preferably 0.080 or less, more preferably 0.070 or less, and still more preferably 0.064 or less. When the tanδ is low, heat generation when receiving energy from outside is small, and therefore, the fatigue resistance tends to be excellent. The tanδ is, for example, 0.040 or more. The tanδ can be measured using a known or typical viscoelasticity measuring device.

In the polyurethane resin, it is preferable that a shoulder peak is not confirmed between -40°C and 40°C (preferably between -60°C and 40°C) in a DMA chart obtained by viscoelasticity measurement. In this case, the polyurethane resin is less likely to harden in a low temperature region.

The polyurethane resin preferably has a tensile permanent set of 15% or less, more preferably 14% or less, and still more preferably 12% or less as measured at a temperature of 23°C under 10% elongation in accordance with JIS K7312. As the tensile permanent set is lower, durability due to a vehicle body load at the time of parking and the fatigue resistance due to flexing at the time of driving tend to be excellent.

In a De Mattia flexing fatigue test conducted on the polyurethane resin in accordance with JIS K7312, a crack is introduced into a test piece in advance by a crack growth test method and the number of flexing cycles until the crack grows and breaks is preferably 120000 cycles or more, more preferably 150000 cycles or more, still more preferably 180000 cycles or more, and particularly preferably 200000 cycles or more. The higher the number of flexing cycles, the better the fatigue resistance.

The polyurethane resin preferably does not substantially contain a constituent unit derived from a component other than each of the above-described components (a component other than polyisocyanates, polyols, and the curing agents). Note that in the present specification, the phrase "do not substantially contain" means that the constituent unit is not actively added, except for an impurity contained in the raw material, and may be, for example, 1 mass% or less.

The polyurethane resin can be produced by a known or typical molding method using a composition containing the urethane prepolymer and the curing agent. For example, molding can be performed by a general molding machine for thermoplastic resin such as extrusion molding, injection molding, or hot press molding.

The viscosity of the composition at 60°C is preferably 4000 mPa·s or less, more preferably 3000 mPa·s or less, and still more preferably 2000 mPa·s or less. When the viscosity is low, handleability of the composition is better, the viscosity during molding processing is low, it is possible to maintain arrangement in the resulting polyurethane resin, and stable quality can be achieved. The viscosity is, for example, 500 mPa·s or more, and may be 1000 mPa·s or more.

Time for viscosity increase until a torque of the composition reaches 100% is preferably 150 seconds or more, more preferably 200 seconds or more, and still more preferably 300 seconds or more.

The polyurethane resin may be a polyurethane resin composition prepared by blending with an additive (e.g., a mold release agent, a plasticizer, a coloring agent, an antioxidant, a UV stabilizer, a heat stabilizer, a crosslinking agent, a foaming agent, a foam stabilizer, a urethanizing catalyst, a filler). The additive described above may be blended together with raw material components before reaction of the urethane prepolymer and the curing agent or may be blended by melt-kneading to a polyurethane resin prepared by the reaction.

[Molded Article]

The polyurethane resin can form a molded article, for example, by a molding method in which a liquid material for molding before reaction is shaped and then reacted and solidified, a molding method in which softening and melting are performed by heating after the reaction, or a molding method in which a solution prepared by dissolving the product after the reaction is used.

Specific examples of the molding method are not particularly limited and include known or typical molding methods, such as coating, cast molding, vacuum molding, extrusion molding, calender molding, blow molding, inflation molding, rotational molding, slush molding, foam molding, compression molding, stamping molding, casting, and dipping.

Specific examples of the molded article described above are not particularly limited and include a film, a sheet, a hose, a tube, a packaging material, a vibration insulator, a binder, a coating film, a coating material, a fiber, foam, a synthetic leather, and an elastic body. The molded article described above can be preferably used in a wide variety of use, such as a clothing or non-clothing article, a packaging material, a household or miscellaneous article, a furniture part, a machine part, an electrical or electronic part, and a part for an automobile or another type of vehicle, a part of an industrial product, a civil engineering or construction material, an agricultural article, a fishing article, a garden supply, a sanitary article, a medical or nursing care articles, and sporting and recreational equipment.

Among them, the molded article is preferably used for a spoke of a non-pneumatic tire. That is, the polyurethane resin is preferably used for the spoke of the non-pneumatic tire because the polyurethane resin is excellent in flexibility and fatigue resistance, and less likely to harden in a low temperature region. In this case, the spoke of the non-pneumatic tire includes at least the polyurethane resin.

[Non-pneumatic tire]

Examples of the non-pneumatic tire include a non-pneumatic tire including an outer reinforced annular band, a hub, and a spoke extending between a radially inner side of the annular band and the hub. The spoke is formed from the polyurethane resin.

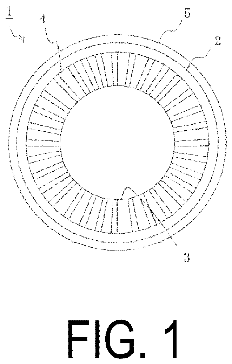

An embodiment of the non-pneumatic tire is shown in FIG. 1. A non-pneumatic tire 1 shown in FIG. 1 includes an annular band 2 with an enhanced outer side of the annulus, a hub 3 and a spoke 4 extending between a radially inner side of the annular band 2 (i.e. the central side of the annular band 2) and the hub 3. The outside of the annular band 2 is reinforced by a tread 5. The hub 3 has an annular shape and is set on a wheel (not shown). A plurality of the spokes 4 are provided radially from the center of the annular band 2 such that the hub 3 and the annular band 2 are connected. The spoke 4 is formed from the polyurethane resin of the present disclosure.

The polyurethane resin of the present disclosure is excellent in flexibility and fatigue resistance, and less likely to harden in a low temperature region. Thus, it is possible to produce a spoke excellent in flex resistance and fatigue resistance using the polyurethane resin. During rotation of the non-pneumatic tire, heat may be accumulated up to around 100°C. Thus, a temperature change of the heat accumulation property and the elastic modulus of the non-pneumatic tire affects not only the fatigue resistance but also the ride comfort. When the polyurethane resin has a low strain and a low tan$\delta$, the temperature stability of elastic change can be improved. Thus, when the polyurethane resin is used for the spoke, the ride comfort of the vehicle can also be excellent.

Each embodiment disclosed in the present specification can be combined with any other feature disclosed in the present specification. The configurations, combinations thereof, and the like in each embodiment are exemplary, and additions, omissions, replacements, and other changes of the configurations can be appropriately made without departing from the spirit of the present disclosure. In addition, each of the inventions according to the present disclosure is not limited by the embodiments or the following examples but is limited only by the claims.

Examples

Hereinafter, an embodiment of the present disclosure will be described in more detail based on examples, but the present disclosure is not limited to these examples.

Example 1

(Preparation of prepolymer)

In a flask, polytetramethylene ether glycol (PTMG) (trade name: "PTMG2000", theoretical molecular weight: 2000, available from Mitsubishi Chemical Corporation) and polycaprolactone diol (PCL) (trade name: "PLACCEL 220UA", molecular weight: 2000, initiator: diethylene glycol, available from Daicel Corporation) were added as the polyol at a molar ratio [PTMG/PCL] of 4/6. Then, diphenylmethane diisocyanate (MDI) (trade name: "Millionate MT", available from Tosoh Corporation) was added to the flask such that the k value was 4.25, and the reaction was performed at 80°C until the residual NCO% reached 9.0% to obtain a prepolymer.

(Preparation of polyurethane test piece)

The prepolymer obtained above and 1,4-butanediol (1,4-BG) (available from Mitsubishi Chemical Corporation), which is used as a chain extender, were charged into a cup container at a molar ratio [NCO/OH] = 1.03, and uniformly mixed and defoamed using a rotation-revolution stirrer (product name "Awatori Rentaro AR-250", available from Thinky Corporation) to obtain a liquid material for molding. The obtained liquid material for molding was poured into a mold, heated together with the mold in an oven at 120°C for 16 hours to be cured, and further aged in a constant temperature and constant humidity environment at 23°C and 50%RH for 48 hours to prepare a polyurethane test piece (rectangular shape, length 13 mm, width 20 mm, and thickness 2 mm).

Examples 2 and 3

A prepolymer and a polyurethane test piece were prepared in the same manner as in Example 1 except that the addition amounts of PTMG and PCL were changed such that the [PTMG/PCL] ratio became the values shown in Table 1.

Example 4

A prepolymer and a polyurethane test piece were prepared in the same manner as in Example 1 except that a copolymer of polytetramethylene ether glycol (PTMG) and polycaprolactone (trade name "PLACCEL T2205T", molecular weight: 2000, available from Daicel Corporation) was used as the polyol.

Comparative Example 1

A polyurethane test piece was prepared in the same manner as in Example 1 except that a PTMG-MDI prepolymer (trade name "VIBRATHANE B836", available from LANXESS) was used as a prepolymer.

Comparative Example 2

A prepolymer and a polyurethane test piece were prepared in the same manner as in Example 1 except that polytetramethylene ether glycol (PTMG) (trade name "PTMG2000", theoretical molecular weight: 2000, available from Mitsubishi Chemical Corporation) was used as polyol, and the k value and the residual NCO% were changed as shown in Table 1.

Comparative Example 3

A prepolymer and a polyurethane test piece were prepared in the same manner as in Example 1 except that the k value and the residual NCO% were changed as shown in Table 1.

Comparative Example 4

A prepolymer and a polyurethane test piece were prepared in the same manner as in Example 1 except that polytetramethylene ether glycol (PTMG) (trade name "PTMG2000", theoretical molecular weight: 2000, available from Mitsubishi Chemical Corporation) was used as polyol.

Example 5

A prepolymer and a polyurethane test piece were prepared in the same manner as in Example 1 except that the addition amounts of PTMG and PCL were changed such that [PTMG/PCL] became the value shown in Table 1.

<Evaluation>

The liquid materials for molding, the prepolymers, and the polyurethane test pieces produced in Examples and Comparative Examples were evaluated as follows. The results are shown in Table 2.

(1) Tensile elastic modulus

Measurement was performed at a temperature of 23°C under 10% elongation in accordance with JIS K7161.

(2) Storage elastic modulus

Using a viscoelasticity measuring device (trade name "DMA 7100", available from Hitachi High-Tech Science Corporation), a test piece of 40 mm × 10 mm × (t) 2 mm was measured at a distance between chucks of 20 mm, a temperature of from -100 to 200°C, a temperature rising rate of 2°C/min, a frequency of 10 Hz, an initial strain, and a dynamic strain of 0.05 in a tensile mode state, E' and tanδ at each temperature were read, and the E' reduction rate was determined by calculation.

$$\text{E' reduction rate} = \{\text{E' }(23°C) - \text{E' }(100°C)\}/\text{E' }(23°C) \times 100$$

(3) Cold hardening

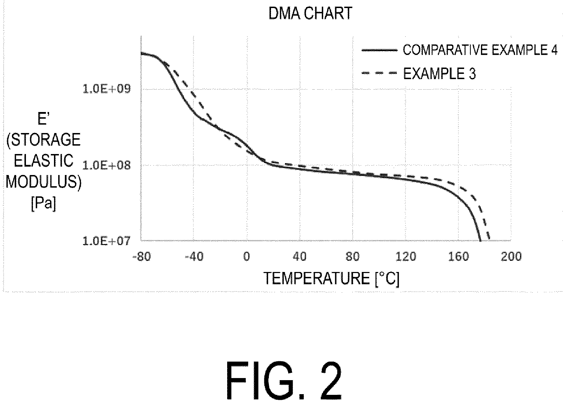

In the DMA chart obtained by the measurement of the storage elastic modulus, the DMA chart in which a shoulder peak was observed between -60°C and 40°C was evaluated as "with cold hardening", and the DMA chart in which no shoulder peak was observed was evaluated as "without cold hardening". The DMA charts of Example 3 and Comparative Example 4 are shown in FIG. 2. In Examples 1, 2, and 4, since [PTMG/PCL] is smaller than that in Example 3, the shoulder peak is less likely to be confirmed.

(4) Tensile permanent set

Measurement was performed at a temperature of 23°C under 10% elongation in accordance with JIS K7312.

(5) Fatigue resistance

In accordance with JIS K7312, using a De Mattia flexing fatigue test, a crack was introduced in advance in a test piece by the crack growth test method, flexing was performed a total of 200000 cycles, the number of flexing cycles until the crack grew and broke was confirmed and calculated every 10000 cycles, and the number of flexing cycles was recorded.

(6) Viscosity

The liquid material for molding was measured at 60°C and 10 rpm using an E-type viscometer (trade name "VISCOMETER TV-22", available from TOKISANGYO).

(7) Pot life

The liquid material for molding was continuously stirred at 60°C and 10 rpm using an E-type viscometer (trade name "VISCOMETER TV-22", available from TOKISANGYO), and the time until the torque reached 100% was measured and taken as a pot life.

(8) Prepolymer appearance

A degree of cloudiness of the prepolymer was visually evaluated.

[Table 1]

(Table 1)

| | Comparative Example | | | | | Examples | | | |
|---|---|---|---|---|---|---|---|---|---|
| | 1 | 2 | 3 | 4 | 5 | 1 | 2 | 3 | 4 |
| Polyol | VIBRATHANE B836 | PTMG2000 | PTMG2000 /PLAC-CEL22 0UA | PTMG2000 | PTMG2000 /PLAC-CEL22 0UA | PTMG2000 /PLAC-CEL22 0UA | PTMG2000 /PLAC-CEL22 0UA | PTMG2000 /PLAC-CEL22 0UA | PLACCEL T2205T |
| [PTMG/PCL] | - | - | 6/4 | - | 2/8 | 4/6 | 6/4 | 8/2 | 5/5 |
| k value | - | 5.00 | 5.00 | 4.25 | 4.25 | 4.25 | 4.25 | 4.25 | 4.25 |
| Diisocyanate | MDI | MDI | MDI | MDI | MDI | MDI | MDI | MDI | MDI |
| Chain extender | 1,4-BG | 1,4-BG | 1,4-BG | 1,4-BG | 1,4-BG | 1,4-BG | 1,4-BG | 1,4-BG | 1,4-BG |
| %NCO | 9.0 | 10.4 | 10.4 | 9.0 | 9.0 | 9.0 | 9.0 | 9.0 | 9.0 |

[Table 2]

[Table 2]

(Table 2)

| | Comparative Example | | | | | Examples | | | |
|---|---|---|---|---|---|---|---|---|---|
| | 1 | 2 | 3 | 4 | 5 | 1 | 2 | 3 | 4 |
| Tensile elastic modulus [%] | 46 | 56 | 59 | 23 | 34 | 39 | 27 | 44 | 37 |
| E'(23°C) [MPa] | 117 | 122 | 109 | 97 | 83 | 102 | 94 | 107 | 93 |
| E'(100°C) [MPa] | 69 | 83 | 60 | 71 | 52 | 64 | 59 | 75 | 54 |
| E' reduction rate [%] | 41 | 32 | 45 | 27 | 37 | 37 | 37 | 30 | 42 |
| tan$\delta$ (23°C) | 0.064 | 0.050 | 0.081 | 0.053 | 0.065 | 0.062 | 0.064 | 0.053 | 0.062 |
| Cold hardening | None | Present | None | Present | None | None | None | None | None |
| Tensile permanent set [%] | 15.1 | 6.8 | 20.5 | 7.0 | 16.8 | 14.0 | 7.0 | 10.1 | 12.7 |
| Number of flexing cycles [cycles] | 120,000 | 40,000 | 30,000 | 40,000 | 100,000 | 120,000 | 200,000 | 200,000 | 200,000 |
| Viscosity [mPa·s] | - | - | - | - | - | 2345 | 2357 | 2901 | 1760 |
| Pot life [s] | - | - | - | - | - | 246 | 248 | 205 | 350 |
| Prepolymer appearance | - | - | - | - | - | Cloudiness | Cloudiness | Cloudiness | Transparent |

As shown in Table 2, the polyurethane test pieces of Examples were determined to have a low tensile elastic modulus and excellent flexibility. In addition, it was determined that there was no cold hardening, and hardening was less likely to occur in a low temperature region. In addition, the number of flexing cycles was 120000 cycles or more, and it was determined that the fatigue resistance was also excellent. In any of Examples, as compared with Comparative Example 1 using a known prepolymer, effects such as low tensile elastic modulus, excellent flexibility, a large number of flexing cycles, and excellent fatigue resistance were confirmed. When polycaprolactone diol was not used as polyol (Comparative Examples 2 and 4), when the k value was 5.00 or more (Comparative Example 3), and when [PTMG/PCL] was less than 3/7 (Comparative Example 5), it was determined that the number of flexing cycles was small and the fatigue resistance was poor in any case.

In Example 4 in which a copolymer of PTMG and polycaprolactone was used as polyol, the viscosity was low, the pot life was long, and the transparency of the prepolymer was high as compared with other Examples.

Hereinafter, variations of the invention according to the present disclosure will be described.

[Supplementary Note 1] A polyurethane resin containing:

a constituent unit derived from a urethane prepolymer containing an aromatic diisocyanate and a diol compound as constituent units; and
a structural portion derived from a curing agent, in which the urethane prepolymer has a k value of less than 5.00, the diol compound includes polytetramethylene ether glycol and polycaprolactone diol and/or includes a copolymer of polytetramethylene ether glycol and caprolactone diol, and a molar ratio [polytetramethylene ether glycol/polycaprolactone] of polytetramethylene ether glycol units to polycaprolactone units in the urethane prepolymer is 3/7 or more.

[Supplementary Note 2] The polyurethane resin according to Supplementary Note 1, in which the aromatic diisocyanate includes diphenylmethane diisocyanate.
[Supplementary Note 3] The polyurethane resin according to Supplementary Note 1 or 2, in which the diol compound has a number average molecular weight of 4000 or less.
[Supplementary Note 4] The polyurethane resin according to any one of Supplementary Notes 1 to 3, in which the polycaprolactone diol includes polycaprolactone diol using diethylene glycol as an initiator.
[Supplementary Note 5] The polyurethane resin according to any one of Supplementary Notes 1 to 4, in which the curing agent includes 1,4-butanediol.
[Supplementary Note 6] The polyurethane resin according to any one of Supplementary Notes 1 to 5, in which a molar ratio [NCO/OH] of isocyanate groups to hydroxy groups is from 0.90 to 1.10.
[Supplementary Note 7] The polyurethane resin according to any one of Supplementary Notes 1 to 6, in which the polyurethane resin is used for a spoke of a non-pneumatic tire.
[Supplementary Note 8] A spoke of a non-pneumatic tire containing the polyurethane resin described in any one of Supplementary Notes 1 to 6.
[Supplementary Note 9] A non-pneumatic tire including:

an outer reinforced annular band;
a hub; and
the spoke described in Supplementary Note 8 extending between a radially inner side of the annular band and the hub.

Reference Signs List

1 Non-pneumatic tire
2 Annular band
3 Hub
4 Spoke
5 Tread

**Claims**

1.   A polyurethane resin comprising:

**EP 4 624 504 A1**

a constituent unit derived from a urethane prepolymer containing an aromatic diisocyanate and a diol compound as constituent units; and
a structural portion derived from a curing agent, wherein
the urethane prepolymer has a k value of less than 5.00,
the diol compound includes polytetramethylene ether glycol and polycaprolactone diol and/or includes a copolymer of polytetramethylene ether glycol and caprolactone diol, and
a molar ratio [polytetramethylene ether glycol/polycaprolactone] of polytetramethylene ether glycol units to polycaprolactone units in the urethane prepolymer is 3/7 or more.

2. The polyurethane resin according to claim 1, wherein the aromatic diisocyanate includes diphenylmethane diisocyanate.

3. The polyurethane resin according to claim 1 or 2, wherein the diol compound has a number average molecular weight of 4000 or less.

4. The polyurethane resin according to claim 1 or 2, wherein the polycaprolactone diol includes polycaprolactone diol using diethylene glycol as an initiator.

5. The polyurethane resin according to claim 1 or 2, wherein the curing agent includes 1,4-butanediol.

6. The polyurethane resin according to claim 1 or 2, wherein a molar ratio [NCO/OH] of isocyanate groups to hydroxy groups is from 0.90 to 1.10.

7. The polyurethane resin according to claim 1 or 2, wherein the polyurethane resin is used for a spoke of a non-pneumatic tire.

8. A spoke of a non-pneumatic tire comprising the polyurethane resin described in claim 1 or 2.

9. A non-pneumatic tire comprising:

an outer reinforced annular band;
a hub; and
the spoke described in claim 8 extending between a radially inner side of the annular band and the hub.

FIG. 1

FIG. 2

## INTERNATIONAL SEARCH REPORT

| International application No. |
| --- |
| **PCT/JP2023/040786** |

### A. CLASSIFICATION OF SUBJECT MATTER

*C08G 18/12*(2006.01)i; *C08G 18/32*(2006.01)i; *C08G 18/40*(2006.01)i; *C08G 18/42*(2006.01)i; *C08G 18/48*(2006.01)i; *C08G 18/66*(2006.01)i; *C08G 18/76*(2006.01)i; *B60C 7/00*(2006.01)i

FI: C08G18/12; C08G18/42 069; C08G18/48 054; C08G18/76; C08G18/76 014; C08G18/32 006; B60C7/00 H; C08G18/66 007; C08G18/40 018

According to International Patent Classification (IPC) or to both national classification and IPC

### B. FIELDS SEARCHED

Minimum documentation searched (classification system followed by classification symbols)

C08G18/12; C08G18/32; C08G18/40; C08G18/42; C08G18/48; C08G18/66; C08G18/76; B60C7/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
| --- | --- | --- |
| X | JP 61-157516 A (MITSUBISHI KASEI KOGYO KK) 17 July 1986 (1986-07-17) claims, examples 1, 2 | 1-3, 5, 6 |
| Y | | 4, 7-9 |
| X | JP 58-59213 A (DAICEL CHEMICAL INDUSTRIES, LTD.) 08 April 1983 (1983-04-08) claims, p. 3, lower left column, lines 4-11, p. 4, upper right column, lines 13-19, synthesis examples 5-7, examples 5-7, tables 1, 2 | 1-3, 5, 6 |
| Y | | 7-9 |
| X | JP 2-189345 A (MITSUBISHI KASEI CORP.) 25 July 1990 (1990-07-25) example 3 | 1-3, 5, 6 |
| Y | | 4 |
| X | JP 2008-126363 A (NIPPON POLYURETHANE IND CO., LTD.) 05 June 2008 (2008-06-05) example 3 | 1-3, 5 |
| Y | | 4 |

☑ Further documents are listed in the continuation of Box C.    ☑ See patent family annex.

| | |
| --- | --- |
| *      Special categories of cited documents: | "T" later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X" document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&" document member of the same patent family |

| Date of the actual completion of the international search | Date of mailing of the international search report |
| --- | --- |
| **26 December 2023** | **16 January 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**EP 4 624 504 A1**

## INTERNATIONAL SEARCH REPORT

International application No.

**PCT/JP2023/040786**

### C. DOCUMENTS CONSIDERED TO BE RELEVANT

| Category* | Citation of document, with indication, where appropriate, of the relevant passages | Relevant to claim No. |
|---|---|---|
| X | JP 46-22168 B1 (TOYO BOSEKI KABUSHIKI KAISHA) 24 June 1971 (1971-06-24)<br>claims, column 5, lines 22-32, examples 1, 3 | 1-3, 5, 6 |
| Y | | 7-9 |
| X | CHEN, Shaojun et al. Triple shape memory effect in multiple crystalline polyurethanes. Polymers for Advanced Technologies, paragraph [2010], vol. 21, pp. 377-380, DOI: 10.[1002]/pat.[1523]<br>ABSTRACT, EXPERIMENT, particularly Materials, Preparation, Scheme 1, RESULTS AND DISCUSSION, particularly table 1, samples S3-S6 | 1, 2, 5, 6 |
| Y | | 4, 7-9 |
| X | JP 61-250019 A (BRIDGESTONE CORP.) 07 November 1986 (1986-11-07)<br>claims, p. 4, lower left column, line 7 to lower right column, line 20, examples 1, 2, table 1 | 1-3, 5, 6 |
| Y | | 7-9 |
| Y | JP 2004-346094 A (DAICEL CHEMICAL INDUSTRIES, LTD.) 09 December 2004 (2004-12-09)<br>claim 6 | 4 |
| Y | JP 10-139868 A (DAICEL CHEMICAL INDUSTRIES, LTD.) 26 May 1998 (1998-05-26)<br>claims, paragraph [0010], example 2 | 4 |
| Y | JP 6-192410 A (DAICEL CHEMICAL INDUSTRIES, LTD.) 12 July 1994 (1994-07-12)<br>claims 1, 3, example 1 | 4 |
| Y | JP 2017-501922 A (COMPAGNIE GENERALE DES ETAVLISSEMENTS MICHELIN) 19 January 2017 (2017-01-19)<br>claims, examples | 7-9 |

Form PCT/ISA/210 (second sheet) (January 2015)

**INTERNATIONAL SEARCH REPORT**
Information on patent family members

International application No.

**PCT/JP2023/040786**

| Patent document cited in search report | | | Publication date (day/month/year) | Patent family member(s) | | | Publication date (day/month/year) |
|---|---|---|---|---|---|---|---|
| JP | 61-157516 | A | 17 July 1986 | (Family: none) | | | |
| JP | 58-59213 | A | 08 April 1983 | (Family: none) | | | |
| JP | 2-189345 | A | 25 July 1990 | (Family: none) | | | |
| JP | 2008-126363 | A | 05 June 2008 | (Family: none) | | | |
| JP | 46-22168 | B1 | 24 June 1971 | (Family: none) | | | |
| JP | 61-250019 | A | 07 November 1986 | US<br>claims, column 5, lines 3-35,<br>examples 1, 2, table 1<br>DE | 4647596<br><br><br>3613961 | A<br><br><br>A1 | |
| JP | 2004-346094 | A | 09 December 2004 | WO<br>TW | 2004/101640<br>200508453 | A1<br>A | |
| JP | 10-139868 | A | 26 May 1998 | (Family: none) | | | |
| JP | 6-192410 | A | 12 July 1994 | (Family: none) | | | |
| JP | 2017-501922 | A | 19 January 2017 | WO<br>claims, examples<br>US<br>CN | 2015/077438<br><br>2016/0288569<br>105745090 | A1<br><br>A1<br>A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022186853 A
- JP 2022202620 A
- JP 2008260514 A
- JP 2015518448 T
- JP 2017501922 T